# EUROPEAN PATENT SPECIFICATION

(11) **EP 4 239 034 B1**
(45) Date of publication and mention of the grant of the patent: **25.11.2026**
(21) Application number: 21886490.8
(22) Date of filing: 15.07.2021
(51) Int. Cl.: C09K 5/10, C09K 15/04, C23F 11/10, C23F 11/14, H01M 8/04

(54) **HEAT TRANSFER FLUID COMPOSITION WITH IMPROVED THERMAL STABILITY**
WÄRMEÜBERTRAGUNGSFLÜSSIGKEITSZUSAMMENSETZUNG MIT VERBESSERTER WÄRMESTABILITÄT
COMPOSITION DE FLUIDE CALOPORTEUR À STABILITÉ THERMIQUE AMÉLIORÉE

(30) Priority: 29.10.2020 KR 20200142462
(43) Date of publication of application: 06.09.2023
(73) Proprietor: KD Finechem Co., Ltd., Saha-gu Busan 49432 (KR)
(72) Inventor: PARK, Jae Yoon, Seoul 06288 (KR); PARK, Hyun Jin, Seongnam-si, Gyeonggi-do 13455 (KR); LEE, Hong Ki, Busan 46765 (KR); KIM, Ja Won, Busan 47610 (KR); YOON, Sang Jun, Busan 46726 (KR)
(74) Representative: Plougmann Vingtoft a/s
(86) International application number: PCT/KR2021/009106
(87) International publication number: WO 2022/092491

(56) References cited:
- WO-A1-2020/094427
- KR-A- 20010 087 263
- KR-A- 20060 031 872
- KR-A- 20100 045 265
- KR-A- 20110 139 012
- KR-B1- 100 771 966
- US-A1- 2004 026 656
- US-A1- 2005 109 979
- US-A1- 2012 270 129

## Description

### Technical Field

This patent application claims priority to and the benefit of Korean Patent Application No. 10-2020-0142462 filed with the Korean Intellectual Property Office on October 29, 2020

The present disclosure relates to a heat transfer fluid composition with improved thermal stability.

### Background Art

Heat transfer fluids (e.g., coolants) for internal combustion engines generally contain 50% by weight of water and 50% by weight of ethylene glycol, and trace amounts of additives such as corrosion inhibitors. However, internal combustion engines are likely to become obsolete in the coming decades as fuel cells emerge as potential replacements.

In general, a fuel cell is an electrochemical device that converts chemical energy of fuel into electrical energy. Fuel cells offer several advantages over internal combustion engines. Fuel cells are more efficient in extracting energy from fuel. For example, efficiency is measured to be 40% for a turbo diesel engine, 30% for a gasoline engine, and 60 to 70% for fuel cells

In addition, fuel cells are quiet and emit a negligible level of pollutants. Furthermore, since the main fuel source for fuel cells is hydrogen, it is more readily available than gasoline used as a fuel source for internal combustion engines. However, the replacement of an internal combustion engine with a fuel cell naturally requires the change of the conventional heat transfer fluid.

A fuel cell consists typically of an anode, a cathode, and an electrolyte disposed between the two electrodes. Each electrode is coated with a catalyst layer. At the anode, a fuel such as hydrogen is catalytically converted to form cations which move through the electrolyte to the cathode. At the cathode, an oxidizing agent such as oxygen reacts with the catalyst layer to form anions. The reaction between anions and cations produces reaction products, electricity, and heat.

The current generated by the fuel cell is proportional to the size (area) of the electrode. As a rule, a single fuel cell generates a relatively small voltage (about 1 volt). To produce a higher voltage, several fuel cells must be connected in series or parallel (e.g., stacked) along the bipolar plates that separate adjacent fuel cells. As used herein, a fuel cell assembly refers to an individual fuel cell. The most common fuel and oxidizer used in fuel cells are hydrogen and oxygen, respectively. In this fuel cell, the reactions occurring at the anode and cathode are represented by the following reaction equations:

Reaction at anode: H₂ --> H⁺ + 2e⁻ (1)

Reaction at cathode: 1/2 O₂ + 2H⁺ + 2e⁻ --> H₂O (2)

Oxygen used in fuel cells comes from air. Hydrogen used herein may be in the form of hydrogen gas or reformed hydrogen. Reformed hydrogen is produced by a reformer, an optional component of the fuel cell assembly, in which hydrocarbon fuels (e.g., methanol, natural gas, gasoline, etc.) are converted to hydrogen. The reforming reaction produces heat as well as hydrogen. Currently, there are five types of fuel cells according to the electrolyte (solid or liquid), operating temperature, and fuel preference.

These types of fuel cells include proton exchange membrane fuel cells ("PEMFC"), phosphoric acid fuel cells ("PAFC"), molten carbonate fuel cells ("MCFC"), solid oxide fuel cells ("SOFC"), and alkaline fuel cells ("AFC").

PEMFCs, also known as polymer electrolyte membrane fuel cells, use an ion exchange membrane as the electrolyte. The membrane allows only protons to pass between the cathode and anode. For PEMFCs, hydrogen fuel is introduced into the anode and catalytically oxidized to release electrons and form protons. Electrons move in the form of a current to the cathode along the external circuit. At the same time, the protons diffuse along the membrane to the cathode, where they react with oxygen to produce water, which eventually completes the whole process. PEMFCs operate at relatively low temperatures (about 200°F), and this type of fuel cell has the disadvantage of being sensitive to impurities in the fuel.

PAFC uses phosphoric acid as an electrolyte. PAFCs have an operating temperature range of about 300 to 400°F. Unlike PEMFCs, PAFCs are not sensitive to impurities in fuel. There is a wide range of fuel options available in this sense. However, PAFCs have several drawbacks. One of them is that PAFCs use an expensive catalyst (platinum). Another disadvantage is the low current and power, compared to other types of fuel cells. Also, PAFCs are generally large in size and weight.

MCFC uses a carbonate of alkali metals, such as Li+, Na+, or K+, as an electrolyte. In order for alkali metal carbonate to function as an electrolyte, it must be in a liquid form. As a result, MCFCs operate at temperatures around 1200°F. This high operating temperature is necessary to obtain sufficient conductivity of the electrolyte. This allows greater flexibility in fuel selection (e.g., reformed hydrogen) but at the same time increases corrosion and failure of cell components.

SOFC uses a solid non-porous metal oxide as an electrolyte rather than a liquid electrolyte. SOFCs, like MCFCs, operate at high temperatures of about 700 to 1000°C (i.e., 1830°F). SOFC's high operating temperature has the same advantages and disadvantages as in MCFC's. An additional advantage of SOFCs lies in the solid-state properties of the electrolyte, which removes restrictions on the shape of the fuel cell assembly (e.g., SOFCs can be designed in a plate or tube shape).

Finally, an alkaline fuel cell, known as AFC, uses an aqueous solution of alkaline potassium hydroxide as the electrolyte. Its operating temperature is about 150-200°C (about 300-400°F). The advantage of AFC is that the cathodic reaction is faster with alkaline electrolytes than with acidic electrolytes. However, AFCs are prone to contamination and require pure reactants such as pure hydrogen and oxygen.

US2005/109979A1 discloses a coolant composition used for cooling a fuel cell, in particular to a coolant composition used for cooling a fuel cell having low conductivity, anti-freeze properties, and excellent anticorrosion properties for a metal, especially an aluminum based material, for use in the cooling system of fuel cell and, further, exhibiting no significant increase in conductivity even after long term use.

US2004/026656A1 discloses antifreeze concentrates comprising a) from 0.05 to 10% by weight of one or more sulfonated or sulfated polyglycols of the formula R-(O)l-(A-O)m-(CH2)k-SO3X in which A is C2- to C4-alkylene, R is H, C1- to C10-alkyl, C2- to C20-alkenyl or C6- to C18-aryl, X is H, an alkali metal or alkaline earth metal, k is a number from 0 to 10, l is 0 or 1, m is a number from 1 to 200, b) from 0.05 to 5% by weight of one or more carbamates of the formula in which X is O or S, R is C1-to C8-alkyl or C6- to C18-aryl, or a corresponding ammonium salt, c) from 0.05 to 5% by weight of an aliphatic or aromatic amine, d) from 0.01 to 1% by weight of a hydrocarbon-triazole, e) alkylene glycols to 100% by weight.

US2012/270129A1 discloses a heat transfer system comprising a circulation loop defining a flow path for a heat transfer fluid, and a heat transfer fluid comprising a liquid coolant, a siloxane corrosion inhibitor of formula R3-Si-[O-Si(R)2]x-OSiR3, wherein R is independently an alkyl group or a polyalkylene oxide copolymer of 1 to 200 carbons, x is from 0 to 100, and further wherein at least one alkyl group and at least one polyalkylene oxide copolymer are present, and a nonconductive polydiorganosiloxane antifoam agent, wherein the conductivity of the heat transfer fluid is less than about 100 µS/cm, and wherein the heat transfer system comprises aluminum, magnesium, or a combination thereof, in intimate contact with the heat transfer fluid.

KR100711966B discloses immobilized concentrate comprising a carboxamide or a sulfonamide as a main component, including a ready-to-use aqueous coolant composition comprising the immobile concentrate.

KR20100045265 discloses an anti-freezing liquid composition for cooling systems in a fuel-cell vehicle is provided to control an electric conduction value and an acidification speed while maintaining an anti-freezing property. Also disclosed is an anti-freezing liquid composition for cooling systems in a fuel-cell vehicle contains 0.02~6wt% of trimethylglycine, 35~65wt% of deionized water and 30~60wt% of alkylene glycol.

On the whole, reactions occurring within a fuel cell assembly (e.g., electrochemical reactions and reforming reactions) are exothermic reactions. However, the catalysts applied to these reactions are sensitive to heat. In order to perform the reaction optimally, the fuel cell must be maintained at a specific temperature that is almost uniform along individual cells that are integrated. For example, catalysts may be damaged at high temperatures, and ice may form within the fuel cell assembly at low temperatures. Therefore, a heat transfer composition is needed to accommodate these temperature conditions.

### Detailed Description of the Invention

### Technical Problem

Accordingly, the present disclosure aims to provide a heat transfer fluid composition with improved thermal stability.

### Technical Solution

The present disclosure relates to a heat transfer fluid composition with improved thermal stability. according to claim 1.

Below, a detailed description will be given of the present disclosure.

An aspect of the present disclosure relates to a heat transfer fluid composition with improved thermal stability, the composition comprising:

at least one solvent selected from the group consisting of water, alcohols, glycols, and glycol ethers; and anthranilamide.

Although not part of the invention, in the present disclosure, the water may be deionized water, pure distilled water, or secondary distilled water, but is not limited thereto.

In the present disclosure, the water may be contained in an amount of 30 to 70% by weight,, based on the total weight of the composition.

So long as it is known in the art, any alcohol can be used in the present disclosure. By way of example, It may be at least one selected from the group consisting of methanol, ethanol, propanol, butanol, furfurol, tetrahydrofurfuryl, ethoxylated furfuryl, ethylene glycol, diethylene glycol, triethylene glycol, 1,2-propylene glycol, 1,3-propylene glycol, dipropylene glycol, butylene glycol, glycerol, monoethyl ether of glycerol, dimethyl ether of glycerol, sorbitol, 1,2,6-hexanetriol, trimethylolpropane, and methoxyethanol, but is not limited thereto.

Any glycols that are known in the art may be used in the present disclosure. For example, it may be at least one selected from the group consisting of ethylene glycol, diethylene glycol, triethylene glycol, propylene glycol, 1,3-propanediol, 1,3-butanediol, 1,5-pentanediol, and hexylene glycol, but is not limited thereto.

Any glycol ether may be used in the present disclosure as long as it is known in the art. For example, it may be at least one selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether, but is not limited thereto.

In one embodiment of the present disclosure, the solvent may be ethylene glycol.

In the present disclosure, glycol ethers may be contained in an amount of 30 to 70% by weight, based on the total weight of the composition.

Anthranilamide in the present disclosure may be contained in an amount of 0.001 to 5.0% by weight, based on the total weight of the composition.

In the present disclosure, the composition includes a betaine, an amino acid as a corrosion- and oxidation-resistant agent.

Although not part of the invention, in the present disclosure, the azoles may be triazoles and/or thiadiazoles, but are not limited thereto.

Although not part of the invention, in the present disclosure, the triazoles may be selected from the group consisting of triazole derivatives, benzotriazole derivatives, and tolutriazole derivatives, but are not limited thereto.

Although not part of the invention, in the present disclosure, examples of the triazoles include N,N-bis(2-ethylhexyl)-4-methyl-1 H-benzotriazole-1-methylamine, N,N-bis(2-ethylhexyl)-5-methyl-1 H-benzotriazole-1-methylamine, octyl 1 H-benzotriazole, di-tert-butylated 1 H-benzotriazole, 1H-1,2,3-triazole, 2H-1,2,3-triazole, 1H-1,2,4-triazole, 4H-1,2,4-triazole, 1-(1', 2'-di-carboxyethyl) benzotriazole, 2-(2'-hydroxy-5'-methyl phenyl) benzotriazole, 1H-1,2,3-triazole, 2H-1,2,3-triazole, 1H-1,2,4-triazole, 4H-1,2,4-triazole, benzotriazole, tolyltriazole, carboxybenzotriazole, 3-amino-1,2,4-triazole, chlorobenzotriazole, nitrobenzotriazole, aminobenzotriazole, cyclohexano [1, 2-d] triazole, 4,5,6,7-tetrahydroxytolyltriazole, 1-hydroxybenzotriazole, ethyl benzotriazole, naphthotriazole, 1-[N,N-bis(2-ethylhexyl)aminomethyl]benzotriazole, 1-[N,N-bis(2-ethylhexyl) aminomethyl]tolyltriazole, 1-[N,N-bis(2-ethylhexyl) aminomethyl]carboxybenzotriazole, 1-[N,N-bis(di-(ethanol)-aminomethyl]benzotriazole, 1-[N,N-bis(di-(ethanol)-aminomethyl]tolyltriazole, 1-[N,N-bis(di-(ethanol)-aminomethyl]carboxybenzotriazole, 1-[N,N-bis(2-hydroxypropyl) aminomethyl]carboxybenzotriazole, 1-[N,N-bis(1-butyl) aminomethyl]carboxybenzotriazole, 1-[N,N-bis(1-octyl) aminomethyl]carboxybenzotriazole, 1-(2', 3'-di-hydroxy propyl) benzotriazole, 1-(2', 3'-di-carboxyethyl) benzotriazole, 2-(2'-hydroxy-3',5'-di-tert-butyl phenyl) benzotriazole, 2-(2'-hydroxy-3',5'-di-tert-amylphenyl) benzotriazole, 2-(2'-hydroxy-4'-octoxyphenyl) benzotriazole, 2-(2'-hydroxy-5'-tert-butyl phenyl) benzotriazole, 1-hydroxybenzotriazole-6-carboxylic acid, 1,2,4-triazol-3-ol, 3-amino-5-phenyl-1,2,4-triazole, 3-amino-5-heptyl-1,2,4-triazole, 3-amino-5-(4-isopropylphenyl)-1,2,4-triazole, 5-amino-3-mercapto-1,2,4-triazole, 3-amino-5-(p.tert-butylphenyl)-1,2,4-triazole, 5-amino-1,2,4-triazole-3-carboxylic acid, 1,2,4-triazole-3-carboxyamide, 4-aminourazole, and 1,2,4-triazol-5-one, for example, 1,2,4 triazole or benzotriazole.

Although not part of the invention, in the present disclosure, examples of the thiadiazoles include 2,5-dimercapto 1,3,4 thiadiazole, thiadiazole, 2-mercapto-5-hydrocarbylthio-1,3,5-thiadiazole, 2 - Mercapto-5-hydrocarbyldithio-1,3,4-thiadiazole, 2,5-bis(hydrocarbylthio)-1,3,4-thiadiazole, 2,5-(bis)hydrocarbyldithio-1,3,4-thiadiazole, but is not limited thereto.

Although not part of the invention, in the present disclosure, the azoles may be contained in an amount of 0.01 to 5.0% by weight, 0.01 to 4.0% by weight, 0.01 to 3.0% by weight, 0.01 to 2.0% by weight, 0.01 to 1.0% by weight, 0.01 to 0.5% by weight, 0.05 to 5.0% by weight, 0.05 to 4.0% by weight, 0.05 to 3.0% by weight, 0.05 to 2.0% by weight, 0.05 to 1.0% by weight, 0.05 to 0.5% by weight, 0.1 to 5.0% by weight, 0.1 to 4.0% by weight, 0.1 to 3.0% by weight, 0.1 to 2.0% by weight, 0.1 to 1.0% by weight, 0.1 to 0.5% by weight, 0.15 to 5.0% by weight, 0.15 to 4.0% by weight, 0.15 to 3.0% by weight, 0.15 to 2.0% by weight, 0.15 to 1.0% by weight, 0.15 to 0.5% by weight, 0.2 to 5.0% by weight, 0.2 to 4.0% by weight, 0.2 to 3.0% by weight, 0.2 to 2.0% by weight, 0.2 to 1.0% by weight, or 0.2 to 0.5% by weight, for example, 0.25% by weight, based on the total weight of the composition, but with no limitations thereto.

In the present disclosure, the amino acid is betaine.

In the present disclosure, betaine is contained in an amount of 0.2 to 0.5% by weight, based on the total weight of the composition

Although not part of the invention, in the present disclosure, the acetamide may be, for example, N,O-bis(trimethylsilyl)acetamide or N-trimethylsilylacetamide.

Although not part of the invention, in the present disclosure, acetamide may be contained in an amount of 0.001 to 5.0% by weight, 0.001 to 4.0% by weight, 0.001 to 3.0% by weight, 0.001 to 2.0% by weight, 0.001 to 1.0% by weight, 0.001 to 0.5% by weight, 0.01 to 5.0% by weight, 0.01 to 4.0% by weight, 0.01 to 3.0% by weight, 0.01 to 2.0% by weight, 0.01 to 1.0% by weight, 0.01 to 0.5% by weight, 0.05 to 5.0% by weight, 0.05 to 4.0% by weight, 0.05 to 3.0% by weight, 0.05 to 2.0% by weight, 0.05 to 1.0% by weight, 0.05 to 0.5% by weight, 0.1 to 5.0% by weight, 0.1 to 4.0% by weight, 0.1 to 3.0% by weight, 0.1 to 2.0% by weight, 0.1 to 1.0% by weight, 0.1 to 0.5% by weight, 0.15 to 5.0% by weight, 0.15 to 4.0% by weight, 0.15 to 3.0% by weight, 0.15 to 2.0% by weight, 0.15 to 1.0% by weight, 0.15 to 0.5% by weight, 0.2 to 5.0% by weight, 0.2 to 4.0% by weight, 0.2 to 3.0% by weight, 0.2 to 2.0% by weight, 0.2 to 1.0% by weight, 0.2 to 0.5% by weight, for example, 0.25% by weight, based on the total weight of the composition, but with no limitations thereto.

In the present disclosure, when containing amino acids, the composition exhibits the same level of performance even if the content of anthranilamide is reduced, and there is also an effect of improving the performance, compared to the case where anthranilamide is not included.

Before and after being left at 60°C for a long period of time (168 hours), the composition (100g) of the present disclosure that is added with 3 g of aluminum powder may undergo a change in electrical conductivity up to six times, for example, up to five time, 4.5 times, 4 times, 3.5 times, 3.4 times, 3.3 times, 3.2 times, or 3.1 times.

Before and after being left at 60°C for a long period of time (168 hours), the composition (100g) of the present disclosure that is added with 3 g of aluminum powder may undergo a change in pH up to 20 times, for example, up to 18 times, 16 times, 14 times, 12 times, 10 times, 8 times, 6 times, 5.5 times, 5 times, 4.5 times, 4 times, 3.5 times, or 3 times.

After being left at 60°C for a long period of time (168 hours), the composition (100g) of the present disclosure that is added with 3 g of aluminum powder may produce an organic acid in an amount of 80 ppm or less, for example, 70 ppm or less, 60 ppm or less, 50 ppm or less, 45 ppm or less, or 40 ppm or less.

Although not part of the invention, in the present disclosure, the organic acid may be glycolic acid and formic acid.

When the organic acid is glycolic acid, the composition (100g) of the present disclosure added with 3 g of aluminum powder may produce glycolic acid in an amount of 70 ppm or less, for example, 60 ppm or less, 50 ppm or less, or 40 ppm or less after being left at 60°C for a long period of time (168 hours).

When the organic acid is formic acid, the composition (100g) of the present disclosure added with 3 g of aluminum powder may produce formic acid in an amount of less than 10 ppm, for example, 9 ppm or less, 8 ppm or less, 7 ppm or less, 6 ppm or less, or 5 ppm or less after being left at 60°C for a long period of time (168 hours).

In the present disclosure, the heat transfer fluid composition may be for use in a hydrogen electric vehicle, but is not limited thereto.

### Advantageous Effects

The present disclosure relates to a heat transfer fluid composition with improved thermal stability, and has an effect of suppressing the oxidation of a coolant provoked by hydrogen vehicle stack cooling system components and operating temperatures.

### Best Mode for Carrying Out the Invention

Disclosed is a heat transfer fluid composition comprising at least one solvent selected from water, alcohol, glycol, and glycol ether; anthranilamide; and a corrosion- and oxidation-resistant agent, wherein the corrosion- and oxidation-resistant agent is betaine, wherein the betaine is contained in an amount of 0.2 to 0.5% by weight, based on the weight of the composition.

### Mode for Carrying Out the Invention

Below, a better understanding of the present disclosure may be obtained through the following examples. The following examples 1-4 and 6 are not according to the invention and are present for illustration purposes only.

PREPARATION EXAMPLE. Preparation of Coolant Composition

### EXAMPLES 1 TO 6

Coolant compositions of various formulations for hydrogen electric vehicles were prepared as shown in Table 1 below. Ingredients and contents included in each composition are given in Table 1. Water and ethylene glycol were used as solvents. The contents given are expressed in% by weight for the solvents, but in parts by weight for ingredients other than the solvents, based on 100 parts by weight of the composition.

**TABLE 1**

| | Ex. 1 | Ex. 2 | Ex. 3 | Ex. 4 | Ex. 5 | Ex. 6 | C. Ex. 1 |
|---|---|---|---|---|---|---|---|
| Ethylene glycol | 49.5 | 49.97 5 | 49.85 | 49.85 | 49.85 | 49.85 | 50 |
| Deionized water | 49.5 | 49.97 5 | 49.85 | 49.85 | 49.85 | 49.85 | 50 |
| Anthranilamide | 1.0 | 0.05 | 0.05 | 0.05 | 0.05 | 0.05 | - |
| 1,2,4-Triazole | - | - | 0.25 | - | - | - | - |
| Benzotriazole | - | - | - | 0.25 | - | - | - |
| betaine | - | - | - | - | 0.25 | - | - |
| n, o (bis trimethysilyl) a cetamide | - | - | - | - | - | 0.25 | - |
| Sum | 100 | 100 | 100 | 100 | 100 | 100 | 100 |

### EXPERIMENTAL EXAMPLE 1. Evaluation for Thermal Oxidation

### 1-1. Measurement of rate of change of electrical conductivity

Each of the coolant compositions (100g) prepared in the Preparation Examples was added with 3 g of aluminum powder and then left at 60°C for a long period of time (168 hours). After removing the aluminum powder therefrom, the compositions were measured for electrical conductivity, and the measurements are summarized in Table 2.

**TABLE 2**

| | | Ex. 1 | Ex. 2 | Ex. 3 | Ex. 4 | Ex. 5 | Ex. 6 | C. Ex. 1 |
|---|---|---|---|---|---|---|---|---|
| Electric al conducti vity | Pre-test | 1.02 | 0.503 | 0.715 | 0.821 | 0.812 | 0.911 | 0.155 |
| | Post-test | 3.14 | 2.14 | 2.18 | 2.41 | 2.43 | 2.65 | 1.01 |
| Change rate (fold) | | 3.08 | 4.25 | 3.05 | 2.94 | 2.99 | 2.91 | 6.52 |

As can be seen in Table 2, the electrical conductivity was increased about 6.5 times in the coolant composition of Comparative Example 1 and about 3 to 4 times in the coolant compositions of Examples 1 to 6. Thus, the coolant compositions of Examples 1 to 6 were observed to exhibit remarkably low increase rates of electrical conductivity, compared to that of Comparative Example 1.

### 1-2. pH change measurement

Each of the coolant compositions (100g) prepared in the Preparation Examples was added with 3 g of aluminum powder and then left at 60°C for a long period of time (168 hours). After removing the aluminum powder therefrom, the compositions were measured for pH, and the measurements are summarized in Table 3.

**TABLE 3**

| | Ex. 1 | Ex. 2 | Ex. 3 | Ex. 4 | Ex. 5 | Ex. 6 | C. Ex. 1 |
|---|---|---|---|---|---|---|---|
| Pre-test | 6.1 | 5.9 | 5.9 | 5.8 | 5.7 | 5.3 | 5.6 |
| Post-test | 5.6 | 5.2 | 5.4 | 5.3 | 5.1 | 4.9 | 4.3 |
| Change rate of proton concentration (fold) | 3.16 | 5.01 | 3.16 | 3.16 | 3.98 | 2.51 | 20.0 |

As can be seen in Table 3, proton concentrations changed up to about 5 times for Examples 1 to 6, but about 20 times for the Comparative Example. Thus, the coolant compositions of the Examples were observed to exhibit remarkably low change rates of proton concentrations, compared to that of the Comparative Example.

### 1-3. Measurement of organic acid production

The organic acids (glycolic acid, formic acid, etc.) resulting from thermal oxidation of ethylene glycol shorten the life of the ion resin filter and speed up its exchange cycle. Accordingly, the organic acid production amount of each of the coolant compositions prepared in the Preparation Example was measured.

In brief, each coolant composition (100 g) prepared in the Preparation Example was added with 3 g of aluminum powder and then left at 60°C for a long period of time (168 hours). Afterward, the amounts of the organic acids glycolic acid and formic acid were measured by IC analysis, and the measurements are summarized in Table 4, below (The amount of organic acids contained in the coolant compositions before the experiment was measured to be 0.)

**TABLE 4**

| ppm | Ex. 1 | Ex. 2 | Ex. 3 | Ex. 4 | Ex. 5 | Ex. 6 | C. Ex. 1 |
|---|---|---|---|---|---|---|---|
| Glycolic acid | 32 | 38 | 35 | 37 | 36 | 34 | 72 |
| Formic acid | - | 5 | 4 | 4 | 3 | 3 | 10 |
| Sum | 32 | 43 | 39 | 41 | 39 | 37 | 82 |

As can be seen in Table 4, glycolic acid was produced in an amount of 72 ppm in Comparative Example 1, but the amount was reduced by half to about 30 ppm in Examples 1 to 6. Formic acid was produced in an amount of 10 ppm in Comparative Example 1, but was detected to amount to up to 5 ppm or not detected at all in Examples 1 to 6. Thus, the coolant compositions of Examples 1 to 6 were observed to generate only a remarkably small amount of formic acid.

### EXPERIMENTAL EXAMPLE 2. Change in Electrical conductivity During Long-Term Storage

When a fuel cell coolant is stored for a long time, electrical conductivity tends to increase. If the electrical conductivity goes up, the life of the stack and ion resin filter will be affected. Thus, even after a certain period of time, the electrical conductivity should be maintained at the level as in a fresh coolant.

Changes in electrical conductivity during long-term storage were examined according to additives. In brief, the electrical conductivity was measured after the product was placed in a PP container, sealed completely, and stored at room temperature (25°C) for at 30, 90, 180, 240, and 360 days, and the average rates of change were calculated according to the following equation, and the result is shown in Table 5. [Equation] 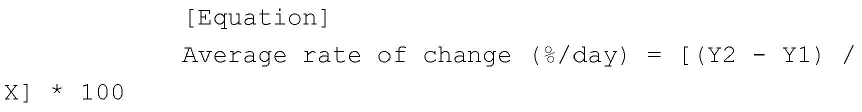 Average rate of change (%/day) = [(Y2 - Y1) / X] * 100

- X:: Test period (days)
- Y1:: Electrical conductivity before test
- Y2:: Electrical conductivity after 360 days

**TABLE 5**

| | Ex. 1 | Ex. 2 | Ex. 3 | Ex. 4 | Ex. 5 | Ex. 6 | C. Ex. 1 |
|---|---|---|---|---|---|---|---|
| Before test | 1.02 | 0.503 | 0.715 | 0.821 | 0.812 | 0.911 | 0.155 |
| 30 Days | 1.31 | 0.854 | 1.01 | 1.13 | 1.11 | 1.22 | 0.852 |
| 90 Days | 1.52 | 1.19 | 1.33 | 1.55 | 1.54 | 1.63 | 1.34 |
| 180 Days | 1.87 | 1.51 | 1.642 | 1.86 | 1.82 | 1.93 | 1.75 |
| 240 Days | 2.28 | 2.02 | 2.04 | 2.34 | 2.23 | 2.54 | 2.62 |
| 360 Days | 2.56 | 2.31 | 2.32 | 2.79 | 2.64 | 2.98 | 3.17 |
| Average rate of change (%/day) | 0.43 | 0.50 | 0.45 | 0.55 | 0.51 | 0.57 | 0.84 |

As can be seen in Table 5, Examples 1 to 6 were observed to undergo a change of 0.4 to 0.6% on average, which was remarkably low, compared to the average change rate of 0.84 in the Comparative Example, demonstrating that the composition of the present disclosure is thermally stable.

### Industrial Applicability

The present disclosure relates to a heat transfer fluid composition with improved thermal stability.

## Claims

1. A heat transfer fluid composition, comprising at least one solvent selected from water, alcohol, glycol, and glycol ether; anthranilamide; and a corrosion- and oxidation-resistant agent,
wherein the corrosion- and oxidation-resistant agent is betaine,
wherein the betaine is contained in an amount of 0.2 to 0.5% by weight, based on the weight of the composition.

2. The heat transfer fluid composition of claim 1, wherein the solvent comprises water and ethylene glycol.

3. The heat transfer fluid composition of claim 2, wherein the water is contained in an amount of 30 to 70% by weight, based on the total weight of the composition.

4. The heat transfer fluid composition of claim 2, wherein the ethylene glycol is contained in an amount of 30 to 70% by weight, based on the total weight of the composition.

5. The heat transfer fluid composition of claim 1, wherein the anthranilamide is contained in an amount of 0.001 to 5.0% by weight, based on the total weight of the composition.

6. The heat transfer fluid composition of claim 1, wherein the composition is a coolant composition for use in hydrogen electric vehicles.

## Patentansprüche

1. Wärmeübertragungsflüssigkeitszusammensetzung, umfassend mindestens ein Lösungsmittel, ausgewählt aus Wasser, Alkohol, Glykol und Glykolether; Anthranilamid; und ein Korrosions- und Oxidationsschutzmittel,
wobei das Korrosions- und Oxidationsschutzmittel Betain ist,
wobei das Betain in einer Menge von 0,2 bis 0,5 Gew.-% enthalten ist, bezogen auf das Gewicht der Zusammensetzung.

2. Wärmeübertragungsflüssigkeitszusammensetzung nach Anspruch 1, wobei das Lösungsmittel Wasser und Ethylenglykol umfasst.

3. Wärmeübertragungsflüssigkeitszusammensetzung nach Anspruch 2, wobei das Wasser in einer Menge von 30 bis 70 Gew.-% enthalten ist, bezogen auf das Gesamtgewicht der Zusammensetzung.

4. Wärmeübertragungsflüssigkeitszusammensetzung nach Anspruch 2, wobei das Ethylenglykol in einer Menge von 30 bis 70 Gew.-% enthalten ist, bezogen auf das Gesamtgewicht der Zusammensetzung.

5. Wärmeübertragungsflüssigkeitszusammensetzung nach Anspruch 1, wobei das Anthranilamid in einer Menge von 0,001 bis 5,0 Gew.-% enthalten ist, bezogen auf das Gesamtgewicht der Zusammensetzung.

6. Wärmeübertragungsflüssigkeitszusammensetzung nach Anspruch 1, wobei die Zusammensetzung eine Kühlmittelzusammensetzung zur Verwendung in Wasserstoff-Elektrofahrzeugen ist.

## Revendications

1. Composition de fluide caloporteur, comprenant au moins un solvant sélectionné parmi l'eau, l'alcool, le glycol et l'éther de glycol ; l'anthranilamide ; et un agent anticorrosion et antioxydant,
dans laquelle l'agent anticorrosion et antioxydant est la bétaïne,
dans laquelle la bétaïne est contenue en une quantité allant de 0,2 % à 0,5 % en poids, par rapport au poids de la composition.

2. Composition de fluide caloporteur selon la revendication 1, dans laquelle le solvant comprend de l'eau et l'éthylène glycol.

3. Composition de fluide caloporteur selon la revendication 2, dans laquelle l'eau est contenue en une quantité allant de 30 % à 70 % en poids, par rapport au poids total de la composition.

4. Composition de fluide caloporteur selon la revendication 2, dans laquelle l'éthylène glycol est contenu en une quantité allant de 30 % à 70 % en poids, par rapport au poids total de la composition.

5. Composition de fluide caloporteur selon la revendication 1, dans laquelle l'anthranilamide est contenu en une quantité allant de 0,001 % à 5,0 % en poids, par rapport au poids total de la composition.

6. Composition de fluide caloporteur selon la revendication 1, dans laquelle la composition est une composition de liquide de refroidissement pour une utilisation dans des véhicules électriques à hydrogène.
